# EUROPEAN PATENT SPECIFICATION

(11) **EP 2 567 510 B1**
(45) Date of publication and mention of the grant of the patent: **12.03.2014**
(21) Application number: 11724787.4
(22) Date of filing: 05.05.2011
(51) Int. Cl.: H04L 12/18, H04L 12/24

(54) **SOURCE SELECTION BY ROUTERS**
QUELLENAUSWAHL ÜBER ROUTER
SÉLECTION DE SOURCE PAR DES ROUTEURS

(30) Priority: 05.05.2010 US 774323
(43) Date of publication of application: 13.03.2013
(73) Proprietor: Telefonaktiebolaget LM Ericsson (publ), 164 83 Stockholm (SE)
(72) Inventor: LESSARD, Stephane, Mirabel Québec J7N 1V2 (CA)
(74) Representative: HOFFMANN EITLE
(86) International application number: PCT/IB2011/052003
(87) International publication number: WO 2011/138761

(56) References cited:
- EP-A1- 1 587 243
- US-B1- 7 418 003
- BHATTACHARYYA S ET AL: "An Overview of Source-Specific Multicast (SSM); rfc3569.txt", IETF STANDARD, INTERNET ENGINEERING TASK FORCE, IETF, CH, 1 July 2003 (2003-07-01), XP015009351, ISSN: 0000-0003
- ESTRIN USC D FARINACCI CISCO A HELMY USC D THALER UMICH S DEERING XEROX M HANDLEY UCL V JACOBSON LBL C LIU USC P SHARMA USC L WEI: "Protocol Independent Multicast-Sparse Mode (PIM-SM): Protocol Specification; rfc2362.txt", IETF STANDARD, INTERNET ENGINEERING TASK FORCE, IETF, CH, 1 June 1998 (1998-06-01), XP015008146, ISSN: 0000-0003

## Description

### TECHNICAL FIELD

The present invention relates generally to communications systems and in particular to methods, devices and systems for distributing media using multicast transmissions.

### BACKGROUND

As the level of technology increases, the options for communications have become more varied. For example, in the last 30 years in the telecommunications industry, personal communications have evolved from a home having a single rotary dial telephone, to a home having multiple telephone, cable and/or fiber optic lines that accommodate both voice and data. Additionally cellular phones and Wi-Fi have added a mobile element to communications. Similarly, in the entertainment industry, 30 years ago there was only one format for television and this format was transmitted over the air and received via antennas located at homes. This has evolved into both different standards of picture quality such as, standard definition television (SDTV), enhanced definition TV (EDTV) and high definition TV (HDTV), and more systems for delivery of these different television display formats such as cable and satellite. Additionally, services have grown to become overlapping between these two industries. As these systems continue to evolve in both industries, the service offerings will continue to merge and new services can be expected to be available for a consumer. Also these services will be based on the technical capability to process and output more information, for example as seen in the improvements in the picture quality of programs viewed on televisions, and therefore it is expected that service delivery requirements will continue to rely on more bandwidth being available through the network including the "last mile" to the end user.

Another related technology that impacts both the communications and entertainment industries is the Internet. The physical structure of the Internet, and associated communication streams, has also evolved to handle an increased flow of data. Servers have more memory than ever before, communications links exist that have a higher bandwidth than in the past, processors are faster and more capable and protocols exist to take advantage of these elements. As consumers' usage of the Internet grows, service companies have turned to the Internet (and other IP networks) as a mechanism for providing traditional services. These multimedia services include Internet Protocol television (IPTV, referring to systems or services that deliver television programs over a network using IP data packets), Internet radio, video on demand (VoD), live events, voice over IP (VoIP), and other web related services received singly or bundled together.

Multicast is one technique used to distribute IPTV (and other multimedia) content to users. As used herein, the term "multicast" refers to a broadcast or point-to-multipoint connection which is established between an end user or an end user's device and a content provider or content provider's equipment, e.g., involving a stream of IP packets which have an address associated with a group of potential recipients. By way of contrast, a "unicast" transmission involves a point-to-point connection. Internet Group Management Protocol (IGMP) is an IP-based control protocol that is used to signal membership of an end station (or any "host" in the IETF standard sense) to a multicast group (e.g., associated with an IPTV channel), e.g., in a local area network (LAN). Once an IGMP Join message leaves the LAN, another protocol called Protocol-Independent Multicast (PIM) is used to convey the message through one or more routers to a source associated with the requested group.

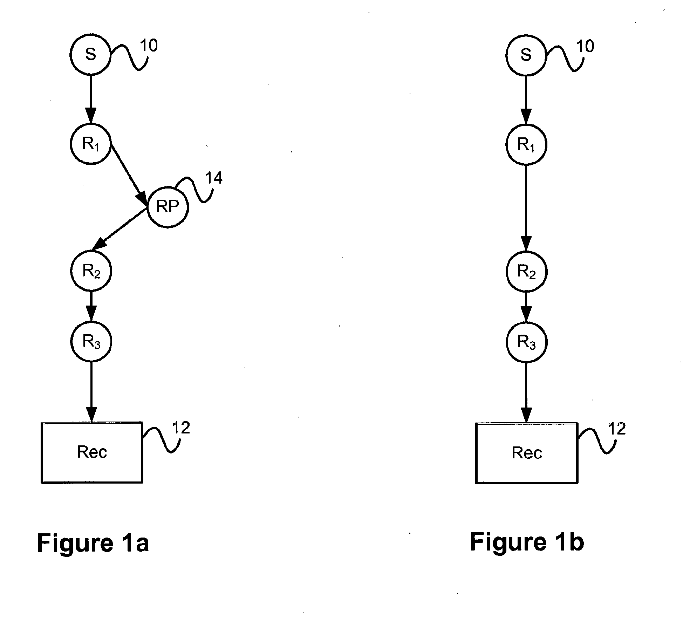

There are a variety of PIM protocol types in use today. For example, the PIM-Sparse Mode (PIM-SM) protocol builds unidirectional shared trees (paths) via which Join requests are routed to a source and multicast traffic is returned to the requester (receiver). The PIM-SM trees are rooted at special routers called "rendezvous point" (RP) routers, through which all of the requests and traffic flow as shown, for example, in Figure 1(a). Therein, the path between a source 10 and a receiver 12 passes through an RP router 14 which is designated as the root node for source 10. Another PIM protocol type is PIM-Source Specific Multicast (PIM-SSM) protocol, in which a direct tree or path is built between the receiver and the source, and in which RP routers are not required. Unlike PIM-SM, PIM-SSM trees are instead rooted at the source specified by the receiver in the requested channel, which request includes the tuple (S,G) where S is the unicast IP address of a particular source and G is a multicast IP address of a port to which the multimedia stream is to be directed, i.e., a destination address. An exemplary PIM-SSM path between the same source 10 and receiver 12 could, for example, be represented by the diagram illustrated in Figure 1(b) wherein it can be seen that the RP router 14 is omitted. US 7,418,003 B1 describes a mechanism for source selection of multicast content based on PIM-SSM.

Even though PIM-SSM is source specific, there may exist multiple sources that are capable of sending the desired data stream, i.e., plural sources are associated with the multicast group to which membership is requested. Today, the receiver is responsible for indicating which source or sources that it will (or will not) accept to receive the content associated with the multicast group that it wishes to join. However, the source(s) requested by the receiver may not be the best (or authorized) source(s) to provide the desired multimedia content from, e.g., the network operator's point of view.

Accordingly, it would be desirable to provide other mechanisms for source selection of multicast content in communication networks.

### SUMMARY

Systems, devices and methods according to the exemplary embodiments enable routers to assist in the source selection process for multicast link establishment. Among other advantages, this provides at least some potential for extra, operator-based network control of source selection in, e.g., source specific multicast systems.

According to one exemplary embodiment, a method for routing a multicast group request message includes receiving the multicast group request message at a router, the multicast group request message including a list of sources associated with a multicast group to which membership is being requested, modifying the list of sources to generate a modified list based upon information stored in the router, and forwarding, by the router, the multicast group request message with the modified list which includes at least one source.

According to another exemplary embodiment, a router includes an interface configured to receive a multicast group request message, the multicast group request message including a list of sources associated with a multicast group to which membership is being requested, a memory in which information is stored, and a processor configured to modify the list of sources based on the information and to forward the multicast group request message with the modified list which includes at least one source.

### BRIEF DESCRIPTION OF THE DRAWINGS

The accompanying drawings illustrate exemplary embodiments, wherein:
Figure 1(a) depicts a tree associated with a PIM-Sparse Mode (PIM-SM) protocol;
Figure 1(b) depicts a tree associated with a PIM-Source Specific Mode (PIM-SSM) protocol;
Figure 2 illustrates an exemplary communication network in which exemplary embodiments can be implemented;
Figure 3(a) depicts conventional operation of a local router to establish a multicast link;
Figure 3(b) depicts operation of a local router according to an exemplary embodiment to establish a multicast link;
Figure 4 is a flow chart illustrating a method for routing a multicast group request message according to an exemplary embodiment; and
Figure 5 is a router in which exemplary embodiments can be implemented.

### DETAILED DESCRIPTION

The following detailed description of the exemplary embodiments refers to the accompanying drawings. The same reference numbers in different drawings identify the same or similar elements. Also, the following detailed description does not limit the invention. Instead, the scope of the invention is defined by the appended claims.

As mentioned above, when multicast content is available from multiple sources in communication networks employing PIM-SSM protocols (or other protocols which are source selective), it has conventionally been the case that source selection is performed by the receiver. That is, the local router which connects the receiver to the communication network simply forwards the Join message that it receives from the receiver, with its original list of one or more sources, through the network until that Join message propagates to one or more of the identified sources. However, according to exemplary embodiments, the local router can modify the list of source(s) provided by the receiver before the local router forwards the list into the network in order to, for example, implement a network policy.

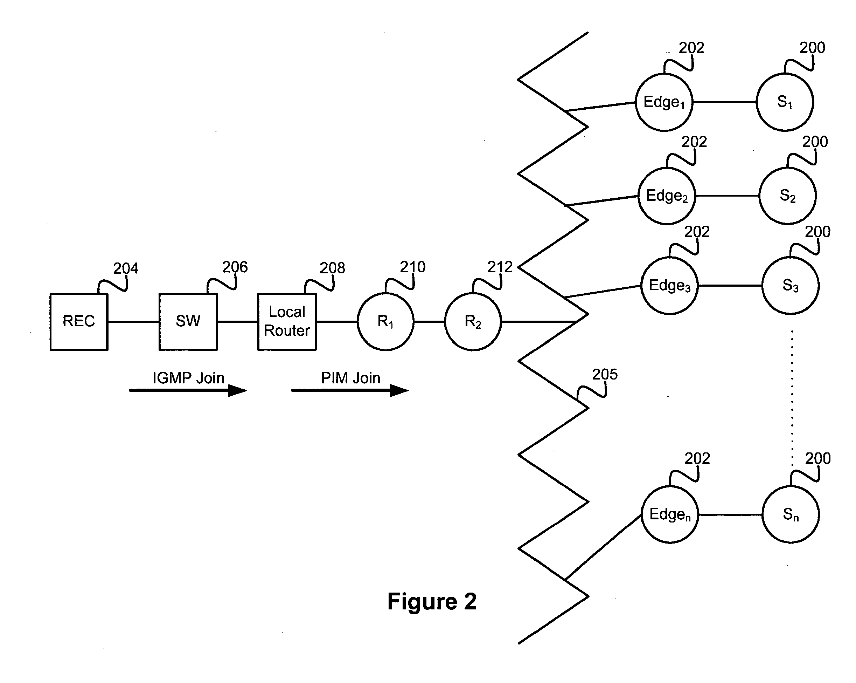

To provide some context from which to discuss the exemplary embodiments in more detail, Figure 2 illustrates an exemplary network topology including a plurality of sources S₁-Sₙ 200 which are associated with the same multicast group, i.e., they are capable of transmitting the content associated to the multimedia group (e.g., same multimedia content, albeit potentially at different service levels as will be discussed below). It will be appreciated by those skilled in the art that although four sources (servers) 200 are shown in Figure 2 that the number of sources n may have any value which is greater or fewer than four. Each of the sources 200 is connected to the network via a respective edge router 202. In a typical network there will be many interconnected routers disposed between the sources 200 and each receiver 204 (also sometimes called a "client device"). To simplify the diagram, instead of illustrating a complicated tree of numerous routers between the edge routers 202 and a particular receiver 204, a break line 205 is intended to conceptually convey the presence of such intervening routers.

To provide an illustrative example, when the receiver 204 desires membership in a multicast group, an IGMP Join message can be sent from the receiver 204 (optionally through a switch 206, e.g., an Ethernet switch) to a local (multicast enabled) router 208. In this context, the local router 208 is the router which is closest to (i.e., most directly connected to) the receiver 204 relative to other routers in the network. The local router 208 then forwards the PIM Join message through one or more other routers 210, 212 until the Join message reaches an edge router 202 which is connected to a source 200 that is associated with the multicast group to which the client 10 requested membership. Whereas IGMP is typically used to convey such requests between the receiver 204, the (optional) switch 206 and a local router 208, a PIM protocol is typically used to convey such Join requests between the various routers 208, 210, 212, and 202 which provide a path to the server or source 200 associated with the requested group.

In version 3 of IGMP (IGMPv3), source filtering capability was added. Since the phrase "Join message" is commonly used as part of the technical lexicon for discussing IGMP functionality, the term is used generically herein to refer to IGMP messages which are sent to join a multicast group regardless of which version of IGMP is involved. As specified in RFC 3376, the IP Multicast interface role with IGMPv3 can take the form IPMulticastListen {socket, interface, multi-cast address, filter mode, source list}, where:
- "socket" is an implementation specific parameter used to distinguish among different programs or processes associated with a receiver,
- "interface" is a local identifier of the network interface on which reception of the specified multicast address is to be enabled or disabled,
- "multi-cast address" is the IP multicast address, or group, to which the request pertains,
- "filter mode" may take either the value EXCLUDE or INCLUDE. If the value of "filter mode" is EXCLUDE, then reception of packets sent to the specified multicast address is requested from all IP source addresses associated with the group except for those listed in the source-list parameter, whereas if the value of "filter mode" is INCLUDE, then reception of packets sent to the specified multicast address is requested only from those IP source addresses listed in the source-list parameter, and
- "source list" is an unordered list of zero or more IP unicast addresses from which multicast reception is desired or not desired, depending on the filter mode.

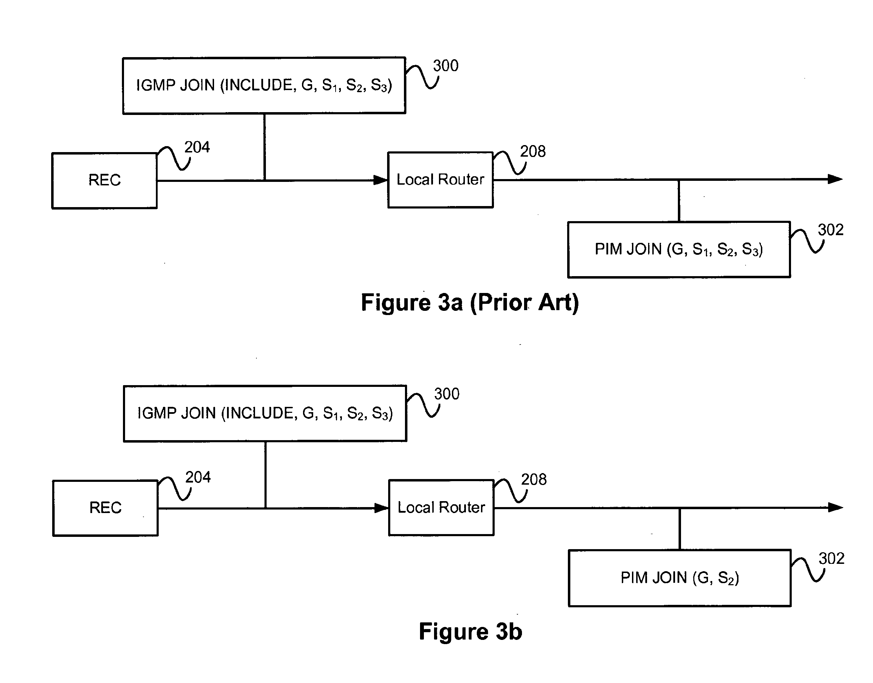

Receivers 204 can become aware of different sources associated with a particular multicast group in a variety of legitimate ways, e.g., via the Internet, from a service provider, or perhaps even illegitimately as described below. Using the IGMPv3 signaling described above a receiver 204 could, therefore, send a request toward its local router 208 to join a multicast group which filters the sources that it is aware of, i.e., to either identify a plurality of sources which are acceptable or identify a plurality of sources which are unacceptable. For example, as shown in Figure 3(a), the receiver 204 could send an IGMPv3 Join command 300 toward its local router 208 indicating a plurality of sources S1, S2 and S3 from which it will accept packets associated with a multicast group G which it wishes to join using the INCLUDE filter mode parameter. Conventionally, this message 300 would be forwarded as the same or substantially the same message 302 (e.g., encapsulated as a PIM message) from local router 208 into the network of routers from which the message 302 would be iteratively forwarded until the message reached the identified sources 200. In particular, message 302 which was output conventionally by the local router 208 has the same list of sources as message 300 which is input to the local router 208.

By way of contrast, according to exemplary embodiments, the local router 208 can modify the list of sources which the local router 208 receives in an IGMP Join message and send a modified PIM Join command to be promulgated through the network as part of the process for establishing a link (e.g., an SSM link) between the receiver 204 and one or more sources 200 by which the receiver 204 will subsequently receive the multicast content. As a purely illustrative example, shown in Figure 3(b), suppose that the local router 208 again receives message 300 as described above with respect to Figure 3(a), i.e., including a list of acceptable sources S1, S2 and S3. However, instead of sending out message 302 with the same source list, local router 208 instead selects S2 from the source list provided in message 300 and modifies message 300 to include only S2 in the source parameter of the PIM Join message 302. The message 302 is then sent out from the local router 208 and promulgated through the network, thus eliminating the possibility that the receiver 204 will receive packets from sources S1 and S3 as part of this multicast group join request despite the fact that receiver 204 indicated those sources as being acceptable. As will be appreciated by those skilled in the art, other potential changes between the messages 300 and 302, e.g., translation of IGMP messages into PIM messages, are omitted from Figure 3(b) to simplify the discussion.

Although Figure 3(b) exemplifies some of the exemplary embodiments, it will be appreciated that it is purely illustrative. For example, local router 208 can modify the received source list to select more than one of the sources supplied in the list. Moreover, if the local route 208 receives a list of sources which are indicated as being EXCLUDED from providing the multicast content to the receiver 204 in the join message, the local router 208 may nonetheless include them (e.g., by removing them from the list with the filter mode parameter set to "EXCLUDE"). According to some exemplary embodiments, the local router 208 may select a subset of the sources received in the source list. According to other exemplary embodiments, the local router 208 may add a new source to the source list. According to another exemplary embodiment, the local router 208 may decide to drop the Join message entirely if the sources listed in the source list if, e.g., the user profile stored in the local router 208 indicates that the user is not permitted to receive multicasts from the listed source(s). These, and other, modifications to the source list are contemplated by the exemplary embodiments.

The local router 208 can use locally stored information about the receiver 204 and/or the sources 200 in order to modify the incoming multicast membership request message 300. For example, exemplary embodiments can be used to implement different levels of service for multicast content delivery from the network point of view. Suppose that, for example, the different sources S1, S2, and S3 represent different servers which output the same multimedia content, but with different quality of service (QoS) characteristics, e.g., delay, audio/video resolution, etc. In such a case, exemplary embodiments which enable the local router 208 to choose which of the sources listed by the receiver 204 shall be used provide a mechanism whereby a network operator can correlate the receiver 204 to a particular user's subscription and operate as a gateway to restrict the receiver 204 to access only those sources for which it has paid to receive a certain QoS. This aspect of the exemplary embodiments can also be used to provide a useful security feature against the distribution of source identities to unauthorized client devices (receivers). For example, if source identities are hacked or otherwise published for unauthorized distribution and entered into client devices to access multicast sources, e.g., having high (gold) service levels, these exemplary embodiments provide a mechanism to restrict unauthorized access to such sources by comparing the received list of sources in the received Join message to, for example, subscription information associated with receiver 204.

Numerous other (or alternative) criteria or information can be used by the local router 208 to make modifications to the source list according to exemplary embodiments. For example, traffic conditions or administrative distance in the network could be considered by the local router 208. Alternatively, link cost or network policy information could be used to make a decision as to which of the listed sources should be included in a modified Join message to be forwarded by the local router 208. More generally, the local router 208 uses its stored routing information to evaluate possible paths between the requesting receiver 204 and the listed sources to determine whether some of the sources listed in the received Join message are sub-optimal for inclusion based on one or more predetermined criteria.

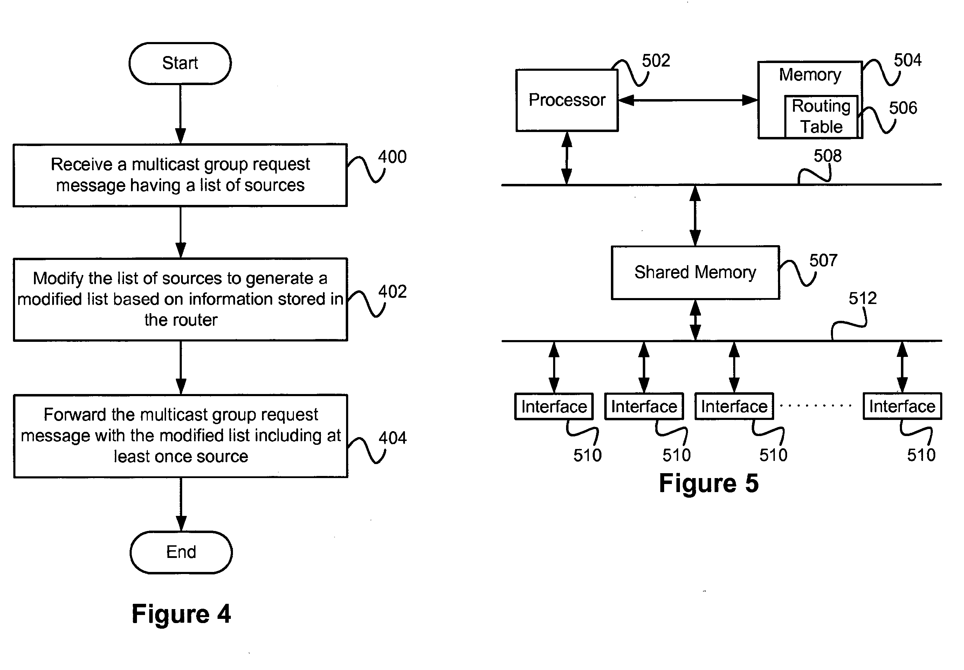

Thus, a generalized method for routing a multicast group request message according to an exemplary embodiment can be described from the perspective of the local router 208 as set forth in the flowchart of Figure 4. Therein, at step 400, the router receives a multicast group request message, the multicast group request message including a list of sources associated with a multicast group to which membership is being requested. Then, at step 402, the router modifies the list of sources based on information stored in the router and forwards (step 404) the multicast group request message with the modified version of the source list which includes at least one source.

Such a router 208 can, for example, be implemented in both hardware and software to achieve the functionality described above. A purely illustrative hardware architecture 500 that can be used to implement local routers 208 according to these exemplary embodiments is provided as Figure 5. Therein one or more processors 502 control the routing of packets through the router 500 in conjunction with a main memory 504 which includes a routing table 506 that includes various information described above (which can be used to modify the source list of incoming Join messages). The processor(s) 502 are connected to a shared memory 507 via a bus or interconnect 508. The shared memory 507 operates to receive packets from the (network) interfaces 510 via a bus or interconnect 512 and, under the control of processor(s) 502 using the routing table 506, routes the received packets to other interfaces 510. It will be appreciated that various other router architectures, e.g., using switching fabrics, etc., exist and can likewise be used to implement the afore-described exemplary embodiments and that the architecture shown in Figure 5 is simply one example.

The above-described exemplary embodiments are intended to be illustrative in all respects, rather than restrictive, of the present invention. All such variations and modifications are considered to be within the scope of the present invention as defined by the following claims. No element, act, or instruction used in the description of the present application should be construed as critical or essential to the invention unless explicitly described as such. Also, as used herein, the article "a" is intended to include one or more items.

## Claims

1. A method for routing a multicast group request message comprising:
- receiving (400) said multicast group request message at a router, said multicast group request message including a list of sources (S₁,S₂,S₃) associated with a multicast group (G) to which membership is being requested;
- modifying (402) said list of sources to generate a modified list based upon information stored in said router; and
- forwarding (404), by said router, said multicast group request message with said modified list which includes at least one source.

2. The method of claim 1, wherein said modified list includes a subset of said sources.

3. The method of claim 1, wherein said information includes at least one of:
administrative distance, link cost, and network policy.

4. The method of claim 1, wherein said list of sources is modified to exclude a source for which a user associated with said multicast group request message is not entitled access.

5. The method of claim 3, wherein said step of modifying further comprises:
- selecting one of said sources to include in said modified list based on said at least one of administrative distance, link cost and network policy.

6. The method of claim 1, wherein said router is a local router which is a first router upstream of a receiver.

7. The method of claim 1, wherein said multicast group request message is an Internet Group Management Protocol, IGMP, Join message and said list of sources includes a plurality of unicast IP addresses each of which are associated with a respective one of said sources.

8. The method of claim 1, further comprising:
- establishing a link between a receiver, which sent said multicast group request message, and said sources in said modified list; and
- receiving, by said receiver, multicast content from said sources in said modified list.

9. The method of claim 1, wherein said steps of receiving and forwarding are performed in a source-specific multicast, SSM, network using Protocol-Independent Multicast SSM protocols.

10. A router comprising:
- an interface (510) configured to receive a multicast group request message, said multicast group request message including a list of sources (S₁,S₂,S₃) associated with a multicast group (G) to which membership is being requested;
- a memory (504) in which information is stored; and
- a processor (502) configured to modify said list of sources based on said information and to forward said multicast group request message with said modified list which includes at least one source.

11. The router of claim 10, wherein said modified list includes a subset of said sources.

12. The router of claim 11, wherein said information includes at least one of:
administrative distance, link cost, and network policy.

13. The router of claim 12, wherein said processor is further configured to select one of said sources to include in said modified list based on said at least one of administrative distance, link cost and network policy.

14. The router of claim 10, wherein said list of sources is modified to exclude a source for which a user associated with said multicast group request message is not entitled access.

15. The router of claim 10, wherein said router is a local router which is most directly connected to a receiver relative to other routers in a network.

16. The router of claim 10, wherein said multicast group request message is an Internet Group Management Protocol, IGMP, Multicast Listen message and said list of sources includes a plurality of unicast IP addresses each of which are associated with a respective one of said sources.

17. The router of claim 10, wherein said router assists to establish a link between a receiver, which sent said multicast group request message, and said sources in said modified list; and to route multicast content from said sources in said modified list to said receiver.

18. The router of claim 10, wherein said router is a source-specific multicast, SSM, router using Protocol-Independent Multicast SSM protocols to forward said multicast group request message.

## Patentansprüche

1. Verfahren zum Routing einer Multicast-Gruppen-Anforderungsnachricht, umfassend:
- Empfangen (400) der Multicast-Gruppen-Anforderungsnachricht an einem Router, wobei die Multicast-Gruppen-Anforderungsnachricht eine Liste von Quellen (S₁, S₂, S₃) enthält, die mit einer Multicast-Gruppe (G) assoziiert sind, für die eine Mitgliedschaft angefordert ist;
- Modifizieren (402) der Liste von Quellen, um eine modifizierte Liste zu erzeugen, auf Grundlage einer in dem Router gespeicherten Information; und
- Weiterleiten (404), durch den Router, der Multicast-Gruppen-Anforderungsnachricht mit der modifizierten Liste, die zumindest eine Quelle enthält.

2. Verfahren nach Anspruch 1, wobei die modifizierte Liste eine Teilgruppe der Quellen enthält.

3. Verfahren nach Anspruch 1, wobei die Information zumindest eines enthält von: administrativer Abstand, Link-Kosten und Netzwerk-Richtlinien.

4. Verfahren nach Anspruch 1, wobei die Liste von Quellen modifiziert ist, um eine Quelle auszuschließen, für die ein Nutzer, assoziiert mit der Multicast-Gruppen-Anforderungsnachricht, keinen Anspruch auf einen Zugriff hat.

5. Verfahren nach Anspruch 3, wobei der Schritt zum Modifizieren ferner umfasst:
- Auswählen von einer der Quellen, um basierend auf der zumindest einen von administrativer Abstand, Link-Kosten und Netzwerkt-Richtlinien in der modifizierten Liste aufzunehmen.

6. Verfahren nach Anspruch 1, wobei der Router ein lokaler Router ist, wobei es sich um einen ersten Router nach einem Empfänger handelt.

7. Verfahren nach Anspruch 1, wobei die Multicast-Gruppen-Anforderungsnachricht eine Internet-Group-Management-Protokoll-, IGMP, Join-Nachricht ist und die Liste von Quellen eine Vielzahl von Unicast-IP-Adressen enthält, die jeweils mit einer jeweiligen der Quellen assoziiert sind.

8. Verfahren nach Anspruch 1, ferner umfassend:
- Einrichten eines Links zwischen einem Empfänger, der die Multicast-Gruppen-Anforderungsnachricht sendet, und der Quellen in der modifizierten Liste; und
- Empfangen, durch den Empfänger, eines Multicastinhalts von den Quellen in der modifizierten Liste.

9. Verfahren nach Anspruch 1, wobei die Schritte zum Empfangen und Weiterleiten in einem Quellen-spezifischen Multicast-SSM-Netzwerk durchgeführt werden, das Protokoll-Independent-Multicast-SSM-Protokolle verwendet.

10. Router, umfassend:
- eine Schnittstelle (510), konfiguriert zum Empfangen einer Multicast-Gruppen-Anforderungsnachricht, wobei die Multicast-Gruppen-Anforderungsnachricht eine Liste von Quellen (S₁, S₂, S₃) enthält, die mit einer Multicast-Gruppe (G) assoziiert sind, für die eine Mitgliedschaft angefordert ist;
- einen Speicher (504), in dem eine Information gespeichert ist; und
- einen Prozessor (502), konfiguriert zum Modifizieren der Liste von Quellen basierend auf der Information und zum Weiterleiten der Multicast-Gruppen-Anforderungsnachricht mit der modifizierten Liste, die zumindest eine Quelle enthält.

11. Router nach Anspruch 10, wobei die modifizierte Liste eine Untergruppe der Quellen enthält.

12. Router nach Anspruch 11, wobei die Information zumindest eines enthält von: administrativer Abstand, Link-Kosten und Netzwerk-Richtlinien.

13. Router nach Anspruch 12, wobei der Prozessor ferner konfiguriert ist zum Auswählen von einer der Quellen, um basierend auf der zumindest einen von administrativem Abstand, Link-Kosten und Netzwerkrichtlinien in der modifizierten Liste aufzunehmen.

14. Router nach Anspruch 10, wobei die Liste der Quellen modifiziert ist, um eine Quelle auszuschließen, für die ein Nutzer, der mit der Multicast-Gruppen-Anforderungsnachricht assoziiert ist, keinen Anspruch auf einen Zugriff hat.

15. Router nach Anspruch 10, wobei der Router ein lokaler Router ist, der am direktesten mit einem Empfänger verbunden ist, relativ zu anderen Routern in einem Netzwerk.

16. Router nach Anspruch 10, wobei die Multicast-Gruppen-Anforderungsnachricht eine Internet-Group-Management-Protokoll-, IGMP, Multicast-Listen-Nachricht ist, und die Liste von Quellen eine Vielzahl von Unicast-IP-Adressen enthält, die jeweils mit einer jeweiligen der Quellen assoziiert sind.

17. Router nach Anspruch 10, wobei der Router eine Unterstützung zum Einrichten eines Links zwischen einem Empfänger, der die Multicast-Gruppen-Anforderungsnachricht sendet, und den Quellen in der modifizierten Liste durchführt; und zum Routing eines Multicast-Inhalts von den Quellen in der modifizierten Liste zu dem Empfänger.

18. Router nach Anspruch 10, wobei der Router ein Quellenspezifischer Multicast-SSM-Router ist, der Protokoll-Independent-Multicast-SSM-Protokolle verwendet, um die Multicast-Gruppen-Anforderungsnachricht weiterzuleiten.

## Revendications

1. Procédé de routage d'un message de demande de groupe de multidiffusion comprenant:
- recevoir (400) ledit message de demande de groupe de multidiffusion au niveau d'un routeur, ledit message de demande de groupe de multidiffusion incluant une liste de sources (51,52,53) associées à un groupe de multidiffusion (G) auquel une appartenance est demandée;
- modifier (402) ladite liste de sources pour générer une liste modifiée sur la base d'information mémorisée dans ledit routeur; et
- acheminer (404) par ledit routeur, ledit message de demande de groupe de multidiffusion avec ladite liste modifiée qui inclut au moins une source.

2. Procédé selon la revendication 1, dans lequel ladite liste modifiée inclut un sous-ensemble desdites sources.

3. Procédé selon la revendication 1, dans lequel ladite information inclut au moins une de: distance administrative, coût de liaison, et politique de réseau.

4. Procédé selon la revendication 1, dans lequel ladite liste de sources est modifiée afin d'exclure une source pour laquelle un utilisateur associé audit message de demande de groupe de multidiffusion n'est pas autorisé à accéder.

5. Procédé selon la revendication 3, dans lequel ladite étape de modifier comprend en outre:
- sélectionner une desdites sources à inclure dans ladite liste modifiée sur la base d'au moins un d'une distance administrative, d'un coût de liaison et d'une politique de réseau.

6. Procédé selon la revendication 1, dans lequel ledit routeur est un routeur local qui est un premier routeur en amont d'un récepteur.

7. Procédé selon la revendication 1, dans lequel ledit message de demande de groupe de multidiffusion est un message d'adhésion IGMP, protocole de gestion de groupe Internet, et ladite liste de sources inclut une pluralité d'adresses IP de monodiffusion, chacune étant associée à une source respective desdites sources.

8. Procédé selon la revendication 1, comprenant en outre:
- établir une liaison entre un récepteur, qui a envoyé ledit message de demande de groupe de multidiffusion, et lesdites sources dans ladite liste modifiée; et
- recevoir, par ledit récepteur, un contenu de multidiffusion provenant desdites sources dans ladite liste modifiée.

9. Procédé selon la revendication 1, dans lequel lesdites étapes de recevoir et d'acheminer sont effectuées dans un réseau de multidiffusion spécifique à une source, SSM, en utilisant des protocoles SSM de multidiffusion indépendante de protocole.

10. Routeur comprenant:
- une interface (510) configurée pour recevoir un message de demande de groupe de multidiffusion, ledit message de demande de groupe de multidiffusion incluant une liste de sources (51,52,53) associées à un groupe de multidiffusion (G) auquel une appartenance est demandée;
- une mémoire (504) dans laquelle une information est mémorisée; et
- un processeur (502) configuré pour modifier ladite liste de sources sur la base de ladite information et acheminer ledit message de demande de groupe de multidiffusion avec ladite liste modifiée qui inclut au moins une source.

11. Routeur selon la revendication 10, dans lequel ladite liste modifiée inclut un sous-ensemble desdites sources.

12. Routeur selon la revendication 11, dans lequel ladite information inclut au moins un de : distance administrative, coût de liaison, et politique de réseau.

13. Routeur selon la revendication 12, dans lequel ledit processeur est en outre configuré pour sélectionner une desdites sources à inclure dans ladite liste modifiée sur la base d'au moins un d'une distance administrative, d'un coût de liaison et d'une politique de réseau.

14. Routeur selon la revendication 10, dans lequel ladite liste de sources est modifiée afin d'exclure une source pour laquelle un utilisateur associé audit message de demande de groupe de multidiffusion n'est pas autorisé à accéder.

15. Routeur selon la revendication 10, dans lequel ledit routeur est un routeur local qui est le plus directement connecté à un récepteur par rapport à d'autres routeurs dans un réseau.

16. Routeur selon la revendication 10, dans lequel ledit message de demande de groupe de multidiffusion est un message d'écoute de multidiffusion IGMP, protocole de gestion de groupe Internet, et ladite liste de sources inclut une pluralité d'adresses IP de monodiffusion, chacune étant associée à une source respective desdites sources.

17. Routeur selon la revendication 10, dans lequel ledit routeur assiste à l'établissement d'une liaison entre un récepteur, qui a envoyé ledit message de demande de groupe de multidiffusion, et lesdites sources dans ladite liste modifiée ; et au routage d'un contenu de multidiffusion depuis lesdites sources dans ladite liste modifiée vers ledit récepteur.

18. Routeur selon la revendication 10, dans lequel ledit routeur est un routeur de multidiffusion spécifique à une source, SSM, utilisant des protocoles SSM de multidiffusion indépendante de protocole pour acheminer ledit message de demande de groupe de multidiffusion.
